# EUROPÄISCHE PATENTSCHRIFT

(11) **EP 4 034 847 B1**
(45) Veröffentlichungstag und Bekanntmachung des Hinweises auf die Patenterteilung: **22.05.2024**
(21) Anmeldenummer: 20760448.9
(22) Anmeldetag: 20.08.2020
(51) Int. Cl.: G01F 1/84, G01F 25/10, G01F 1/36, G01F 7/00, G01F 1/74

(54) **ANORDNUNG UND VERFAHREN ZUM ERKENNEN UND KORRIGIEREN EINER FEHLERHAFTEN DURCHFLUSSMESSUNG**
ARRANGEMENT AND METHOD FOR IDENTIFYING AND CORRECTING A FAULTY VOLUMETRIC FLOW MEASUREMENT
AGENCEMENT ET PROCÉDÉ D'IDENTIFICATION ET DE CORRECTION DE MESURE DE DÉBIT VOLUMÉTRIQUE DÉFECTUEUSE

(30) Priorität: 24.09.2019 DE 102019125682
(43) Veröffentlichungstag der Anmeldung: 03.08.2022
(73) Patentinhaber: Endress+Hauser Flowtec AG, 4153 Reinach (BL) (CH)
(72) Erfinder: RIEDER, Alfred, 84032 Landshut (DE); ZHU, Hao, 85354 Freising (DE); DRAHM, Wolfgang, 85435 Erding (DE); GÜTTLER, Andreas, 85406 Zolling (DE)
(74) Vertreter: Hahn, Christian
(86) Internationale Anmeldenummer: PCT/EP2020/073412
(87) Internationale Veröffentlichungsnummer: WO 2021/058207

(56) Entgegenhaltungen:
- WO-A1-2018/174841
- US-A1- 2007 017 304
- US-A1- 2011 029 259

## Beschreibung

Die Erfindung betrifft eine Anordnung und ein Verfahren zum Erkennen und Korrigieren einer fehlerhaften Durchflussmessung bei einem Coriolis-Durchflussmessgerät.

Coriolis-Durchflussmessgeräte, wie beispielsweise in der DE 102015120087A1 gezeigt, weisen bei Flüssigkeiten mit Gaseinschluss bzw. mitgeführtem Gas verringerte Messgenauigkeit auf. Dies kann durch eine Messung einer Druckdifferenz zwischen einem Einlauf und einem Auslauf eines Messrohrs des Coriolis-Messgerät kompensiert werden, da über diese Druckdifferenz bei kleinem Durchfluss eine bessere Aussage über den Durchfluss getroffen werden kann. Es hat sich jedoch gezeigt, dass auch diese Druckdifferenz unzuverlässig sein kann.

Die US2011029259A1 offenbart ein Verfahren zum Betreiben einer Anordnung umfassend einen Differenzdrucksensor sowie ein Durchflussmessgerät, wobei ein gemessener Differenzdruck mit einem erwarteten Differenzdruck verglichen wird.

Die WO2018174841A1 beschreibt ein Verfahren zum Bestimmen eines Nullpunkts eines Vibrationsmessgeräts.

Die US2007017304A1 beschreibt ein Coriolis-Massedurchflussmessgerät mit einer Erkennung eines Nulldurchflusses mittels zusätzlicher Sensoren.

Aufgabe der Erfindung ist es daher, eine Anordnung und ein Verfahren zwecks zuverlässiger Durchflussmessung vorzuschlagen.

Die Aufgabe wird gelöst durch eine Anordnung gemäß dem unabhängigen Anspruch 1 sowie durch ein Verfahren gemäß dem unabhängigen Anspruch 4.

Eine erfindungsgemäße Anordnung zum Erkennen einer fehlerhaften Durchflussmessung umfasst:
Eine Rohrleitung;
Ein Coriolis-Durchflussmessgerät umfassend zumindest ein Messrohr mit jeweils einem Einlauf und einem Auslauf eingerichtet zum Messen eines Massedurchflusses eines durch die Rohrleitung strömenden Mediums;
wobei ein erster Drucksensor in oder an einem einlaufseitigen Abschnitt der Rohrleitung und ein zweiter Drucksensor in oder an einem auslaufseitigen Abschnitt der Rohrleitung dazu eingerichtet sind,
und/oder wobei ein Differenzdrucksensor dazu eingerichtet ist, einen Druckunterschied zwischen einem einlaufseitigen Abschnitt der Rohrleitung und einem auslaufseitigen Abschnitt der Rohrleitung zu erfassen,
wobei die Drucksensoren und/oder der Differenzdrucksensor dazu eingerichtet sind, per Bestimmung eines Differenzdrucks zwischen einem einlaufseitigen Abschnitt der Rohrleitung und einem auslaufseitigen Abschnitt der Rohrleitung eine Durchflussgeschwindigkeit des Mediums durch die Rohrleitung zu bestimmen;
wobei ein erster Kontrollsensor in oder an einem einlaufseitigen Abschnitt der Rohrleitung und ein zweiter Kontrollsensor in oder an einem auslaufseitigen Abschnitt der Rohrleitung angebracht ist,
wobei die Kontrollsensoren dazu eingerichtet sind, eine andere Messgröße als den Mediendruck zu überwachen um einen statischen Medienzustand zu erkennen,
wobei eine elektronische Mess-/Betriebsschaltung des Coriolis-Durchflussmessgeräts oder ein externer Computer dazu eingerichtet ist, Messsignale der Kontrollsensoren, der Drucksensoren und/oder des Differenzdrucksensors aufzunehmen und zu verarbeiten sowie eine Aussage bezüglich der Durchflussgeschwindigkeit des Mediums zu treffen,
wobei die elektronische Mess-/Betriebsschaltung des Coriolis-Durchflussmessgeräts oder der externe Computer dazu eingerichtet ist, eine Messung der Durchflussgeschwindigkeit per Differenzdruckmessung zu ignorieren, falls mittels der Kontrollsensoren ein statischer oder quasistatischer Medienzustand festgestellt wird.

Mittels der Kontrollsensoren kann also überwacht werden, ob der ermittelte Differenzdruck aufgrund einer statischen oder sich quasistatisch ändernden bzw. fortbewegenden Flüssigkeitssäule oder aufgrund eines nennenswerten Durchflusses bewirkt ist und gegebenenfalls eine Durchflussmessung per Differenzdruckmessung korrigiert werden. Mittels einer solchen Anordnung kann bei Durchflussraten, bei welchen ein Coriolis-Durchflussmessgerät eine geringere Messgenauigkeit aufweist, eine zuverlässige Messung des Durchflusses ermöglicht werden.

In einer Ausgestaltung ist eine Messgröße der Kontrollsensoren zumindest eine aus folgender Liste:
Mediendichte, Viskosität, Schallgeschwindigkeit, Leitfähigkeit, Wärmekapazität, elektrische Kapazität, Aggregatzustand des Mediums.

Durch Messung bzw. Kontrolle zumindest einer der Messgrößen zwischen einem einlaufseitigen Abschnitt der Rohrleitung und einem auslaufseitigen Abschnitt der Rohrleitung kann beispielsweise ein unterschiedlicher Aggregatzustand festgestellt und als Hinweis auf eine statische Flüssigkeitssäule aufgefasst werden.

Ein erfindungsgemäßes Verfahren weist folgende Schritte auf: Messen eines Massedurchflusses eines durch eine Rohrleitung strömenden Mediums mit einem Coriolis-Durchflussmessgerät, wobei das Coriolis-Durchflussmessgerät über einen Einlauf und einen Auslauf mit der Rohrleitung verbunden ist,
Messen eines Differenzdrucks des Mediums zwischen einem einlaufseitigen Abschnitt der Rohrleitung und einem auslaufseitigen Abschnitt der Rohrleitung, Bestimmen einer ersten Durchflussgeschwindigkeit des Mediums durch die Rohrleitung auf Basis der Differenzdruckmessung,

Messen einer anderen, das Medium betreffende Messgröße als den Mediendruck mit einem ersten Kontrollsensor in oder am einlaufseitigen Abschnitt der Rohrleitung und einem zweiten Kontrollsensor in oder am auslaufseitigen Abschnitt der Rohrleitung,

Ignorieren der Messung der Durchflussgeschwindigkeit per Differenzdruckmessung falls mittels der Kontrollsensoren ein statischer oder quasistatischer Medienzustand festgestellt wird.

In einer Ausgestaltung weist die Erkennung des statischen Medienzustands folgende Schritte auf:
Erstellen eines ersten Messwertverlaufs mit dem ersten Kontrollsensor, und Erstellen eines zweiten Messwertverlaufs mit dem zweiten Kontrollsensor;
Interpretieren einer Messwertdifferenz zwischen Messwerten des ersten Messwertverlaufs und Messwerten des zweiten Messwertverlaufs als Folge eines statischen Medienzustands, falls die Messwertdifferenz relativ zu einem ersten Mittelwert der zugehörigen Messwerte größer ist als ein erster Schwellwert
   und/oder
Bestimmen einer zweiten Durchflussgeschwindigkeit aus einer Kreuzkorrelation zwischen dem ersten Messwertverlauf und dem zweiten Messwertverlauf und Interpretieren einer Abweichung der zweiten Durchflussgeschwindigkeit relativ zu einem zweiten Mittelwert aus der ersten Durchflussgeschwindigkeit und der zweiten Durchflussgeschwindigkeit als Folge eines statischen Medienzustands, falls die Abweichung größer ist als ein zweiter Schwellwert
   und/oder
Interpretieren einer Messwertdifferenz zwischen Messwerten des ersten Messwertverlaufs und Messwerten des zweiten Messwertverlaufs als Folge eines statischen Medienzustands, falls die Messwertdifferenz über eine Zeitdauer konstant ist.

Eine konstante Messwertdifferenz kann beispielsweise durch eine Schwankung von Messwerten um einen Mittelwert über die Zeitdauer kleiner als ein vorgegebener Wert erkannt werden. Ein solcher Wert kann beispielsweise aus einer Grenze für eine Standardabweichung oder einer Varianz bestimmt werden. Der Fachmann wird einen solchen Wert an die Anordnung bzw. das Verfahren anpassen.

In einer Ausgestaltung ist der erste Schwellwert beispielsweise mindestens 20% und insbesondere mindestens 40% und bevorzugt mindestens 50% größer als der erste Mittelwert,
und/oder
wobei der zweite Schwellwert beispielsweise mindestens 20% und insbesondere mindestens 40% und bevorzugt mindestens 50% größer ist als der zweite Mittelwert. In einer Ausgestaltung ist die Zeitdauer größer als 2 Sekunden, und insbesondere größer als 4 Sekunden und bevorzugt größer als 5 Sekunden.

Im Folgenden wird die Erfindung anhand von Ausführungsbeispielen beschrieben.
- Fig. 1: skizziert schematisch eine erfindungsgemäße Anordnung.
- Fig. 2: skizziert schematisch Messwertverläufe.
- Fig. 3: skizziert ein schematisches Verfahren.

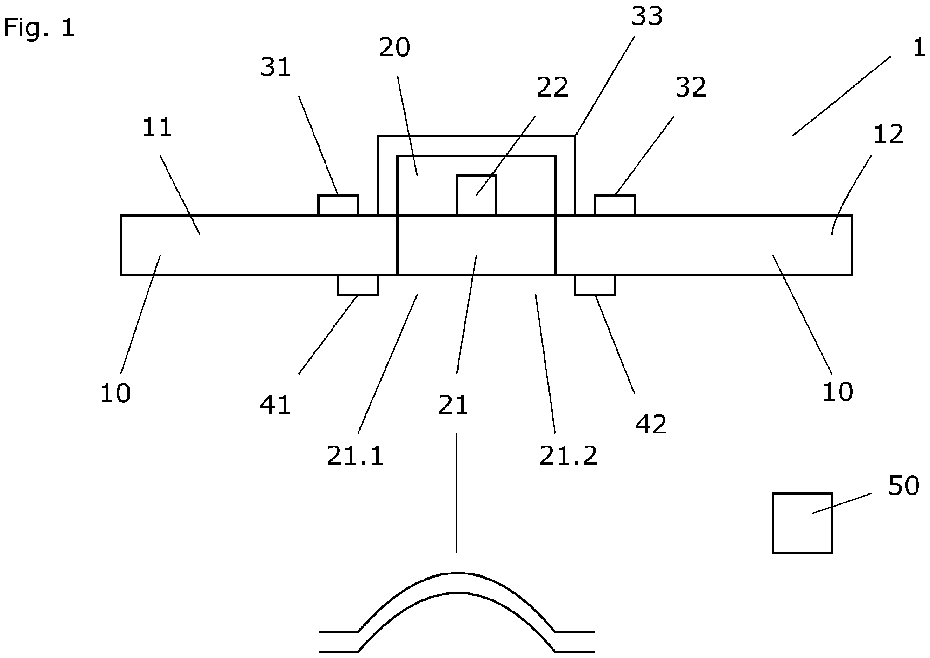

Fig. 1 skizziert eine erfindungsgemäße Anordnung 1 mit einem Coriolis-Messgerät 20 mit einem Messrohr 21, welches in einer Rohrleitung 10 angeordnet ist. Ein Einlauf 21.1 des Messrohrs 21 ist im einem stromaufwärts liegenden Abschnitt 11 der Rohrleitung verbunden, und ein Auslauf 21.2 mit einem stromabwärts liegenden Abschnitt 12 der Rohrleitung. Ein Coriolis-Messgerät kann auch mehr als ein Messrohr aufweisen, die hier gewählte Darstellung ist beispielhaft und nicht einschränkend auszulegen. Am einlaufseitigen Abschnitt der Rohrleitung 11 ist ein erster Drucksensor 31 und ein erster Kontrollsensor 41 angeordnet, und am auslaufseitigen Abschnitt der Rohrleitung 12 ist ein zweiter Drucksensor 32 und ein zweiter Kontrollsensor 42 angeordnet. Alternativ und oder zusätzlich zu den Drucksensoren kann wie hier schematisch dargestellt auch ein Differenzdrucksensor 33 eingerichtet sein. Die Positionierung der Sensoren 31, 32, 33, 41, 42 relativ zueinander ist rein beispielhaft. Die Sensoren können beispielsweise auch in der Rohrleitung angeordnet sein. Die Drucksensoren bzw. der Differenzdrucksensor sind dazu eingerichtet, einen Differenzdruck zwischen dem Einlauf 21.1 des Messrohrs und dem Auslauf 21.2 des Messrohrs zu bestimmen. Falls der Massedurchfluss eines Mediums durch die Rohrleitung gering ausfällt, so dass das Coriolis-Durchflussmessgerät mit geringerer Zuverlässigkeit und Messgenauigkeit operiert, kann mittels der Differenzdruckmessung ein Messwert für eine mittlere Durchflussgeschwindigkeit des Mediums durch die Rohrleitung ermittelt werden, welcher für eine weitere oder alternative Massedurchflussmessung herangezogen werden kann. Coriolis-Messgeräte 20 können wie schematisch angedeutet Messrohre mit jeweils einem Messrohrbogen oder aber auch gerade Messrohre aufweisen. Unter bestimmten Bedingungen kann sich in zumindest einem Messrohr eine statische oder quasistatische Flüssigkeitssäule mit einem Flüssigkeitsspiegel zwischen Einlauf und Auslauf ausbilden, welche statische Flüssigkeitssäule einen Differenzdruck zwischen Einlauf 21.2 und Auslauf 21.2 bewirkt. In diesem Fall liefert eine Durchflussgeschwindigkeitsmessung auf Basis eines Differenzdrucks falsche Messwerte. Mittels des ersten Kontrollsensors und des zweiten Kontrollsensors kann nun das Vorliegen einer messwerteverfälschenden Flüssigkeitssäule überprüft werden. Bei Erkennen einer solchen statischen Flüssigkeitssäule kann die Messung der Durchflussgeschwindigkeit per Differenzdruckmessung ignoriert werden, so dass das Coriolis-Messgerät einen Null-Durchfluss meldet.

Der erste Kontrollsensor 41 sowie der zweite Kontrollsensor 42 können beispielsweise zumindest eine der folgenden Messgrößen des Mediums überwachen: Massendichte, Viskosität, Schallgeschwindigkeit, Leitfähigkeit, Wärmekapazität, elektrische Kapazität, Aggregatzustand. Auf diese Weise kann eine Zweiphasigkeit des Mediums in Form einer Flüssigkeitssäule festgestellt werden.

Eine elektronische Mess-/Betriebsschaltung 22 des Coriolis-Durchflussmessgerät ist dazu eingerichtet, Messsignale der Kontrollsensoren, der Drucksensoren und/oder des Differenzdrucksensors aufzunehmen und zu verarbeiten sowie eine Aussage bezüglich der Durchflussgeschwindigkeit des Mediums zu treffen, oder ein externer Computer 50 ist dazu eingerichtet, Messsignale der Kontrollsensoren, der Drucksensoren und/oder des Differenzdrucksensors sowie Durchflussmesswerte der elektronischen Mess-/Betriebsschaltung aufzunehmen und zu verarbeiten sowie eine Aussage bezüglich der Durchflussgeschwindigkeit des Mediums zu treffen. Die elektronische Mess-/Betriebsschaltung ist üblicherweise in einem dafür vorgesehen Gehäuse (nicht gezeigt) angeordnet, dies ist jedoch Stand der Technik und dem Fachmann geläufig. Die Übermittlung von Messsignalen sowie Messwerten findet dabei beispielsweise über elektrische Verbindungsleitungen und/oder über drahtlose Verbindungen statt. Aus Gründen der Übersichtlichkeit wurde auf eine Darstellung solcher Verbindungen verzichtet, dem Fachmann sind solche Verbindungen jedoch bekannt, er wird sie eigenständig nach seinen Wünschen einrichten.

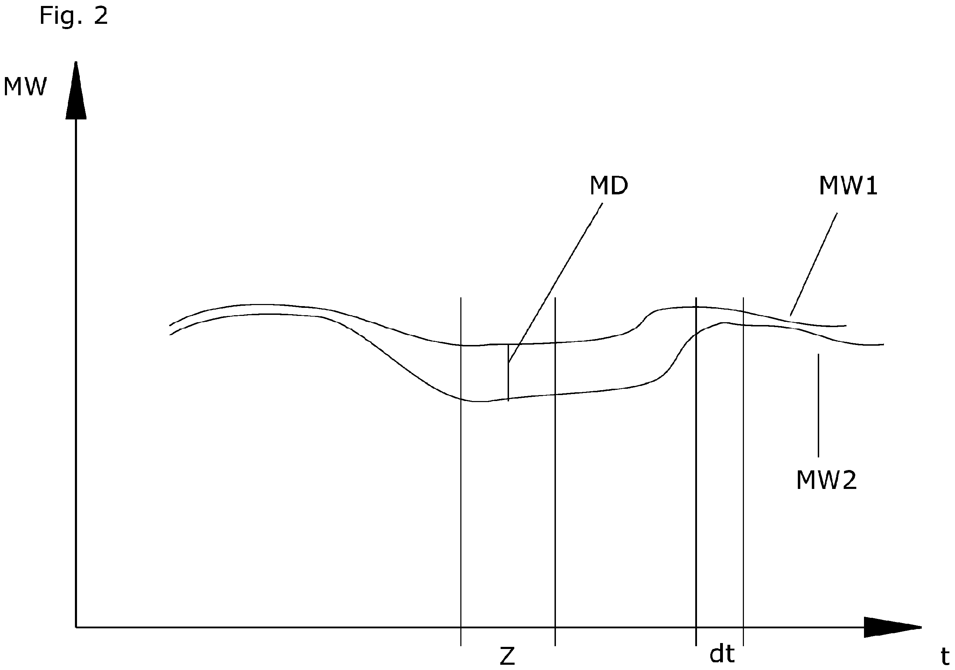

Fig. 2 beschreibt anhand eines schematischen und beispielhaften ersten Messwertverlaufs MW1 sowie eines schematischen und beispielhaften zweiten Messwertverlaufs MW2 Kriterien zur Prüfung des Vorliegens einer Flüssigkeitssäule. Der erste Messwertverlauf entspricht hier einem durch den ersten Kontrollsensor aufgenommenen Messwertverlauf und der zweite Messwertverlauf entspricht hier einem durch den zweiten Kontrollsensor aufgenommenen Messwertverlauf. Die Messwertverläufe können beispielsweise Messwerte der folgenden Messgrößen sein: Massendichte, Viskosität, Schallgeschwindigkeit, Leitfähigkeit, Wärmekapazität, elektrische Kapazität. Ein Aggregatzustand oder verschiedene Phasen des Mediums können aus vorgenannten Größen hergeleitet werden.

Hier weisen beide Messwertverläufe zu Beginn sehr ähnliche Messwerte und somit eine kleine Messwertdifferenz MD auf. Mit Ausbildung einer statischen Flüssigkeitssäule, bei welcher ein Flüssigkeitsspiegel zwischen Einlauf und Auslauf des Messrohrs liegt, kann wie hier dargestellt eine Differenz zwischen den Messwertverläufen größer werden. Beispielsweise führt bei Messung einer lokalen Mediendichte Luft zu einem geringeren Messwert als eine Flüssigkeit. Liegt ein Flüssigkeitsspiegel einer Flüssigkeitssäule zwischen Einlauf und Auslauf eines Messrohrs, so werden der erste Kontrollsensor und der zweite Kontrollsensor stark unterschiedliche Mediendichten messen. Falls Unterschiede zwischen Messwerte des ersten Kontrollsensors und des zweiten Kontrollsensors betragsmäßig einen ersten Schwellwert überschreiten, kann dies als ein Vorliegen einer quasistatischen oder statischen Flüssigkeitssäule mit Flüssigkeitsspiegel zwischen Einlauf und Auslauf des Messrohrs gewertet werden und eine per Differenzdruck berechnete Durchflussgeschwindigkeit / Massedurchfluss des Mediums ignoriert werden.

Ein weiteres Kriterium zum Feststellen eines Vorliegens einer quasistatischen oder statischen Flüssigkeitssäule mit Flüssigkeitsspiegel zwischen Einlauf und Auslauf des Messrohrs kann eine Zeitdauer Z sein, über welche ein Betrag von Unterschieden zwischen Messwerte des ersten Kontrollsensors und des zweiten Kontrollsensors zumindest konstant ist. Konstantheit bedeutet in diesem Fall, dass eine Schwankung des Unterschieds in Bezug auf die Zeitdauer Z beispielsweise bemessen durch eine Standardabweichung oder eine Varianz kleiner ist als ein festgelegter Wert. Der Fachmann kann einen solchen Wert ohne Probleme aufgrund physikalisch-technischer Überlegungen und/oder aufgrund von Berufserfahrung festlegen.

Ein weiteres Kriterium zum Feststellen eines Vorliegens einer quasistatischen oder statischen Flüssigkeitssäule mit Flüssigkeitsspiegel zwischen Einlauf und Auslauf des Messrohrs kann mittels einer Kreuzkorrelation zwischen erstem Messwertverlauf und zweitem Messwertverlauf überprüft werden. Bei einem fließenden Medium können beispielweise bei Vorliegen von Gasblasen in einer Flüssigkeit die Messwertverläufe zeitversetzt in charakteristischer Weise verändert sein. Dieser Zeitversatz dt kann mittels Kreuzkorrelation bestimmt werden, und bietet eine Grundlage für die Bestimmung einer zweiten Durchflussgeschwindigkeit.

Eine Abweichung der zweiten Durchflussgeschwindigkeit relativ zu einem zweiten Mittelwert aus der ersten Durchflussgeschwindigkeit und einer zweiten Durchflussgeschwindigkeit bestimmt durch Messung einer Druckdifferenz zwischen Einlauf und Auslauf kann als Folge eines statischen Medienzustands mit einem Flüssigkeitsspiegel zwischen Einlauf und Auslauf gewertet werden.

Bei einer anderen Messgröße als die Mediendichte gilt Äquivalentes.

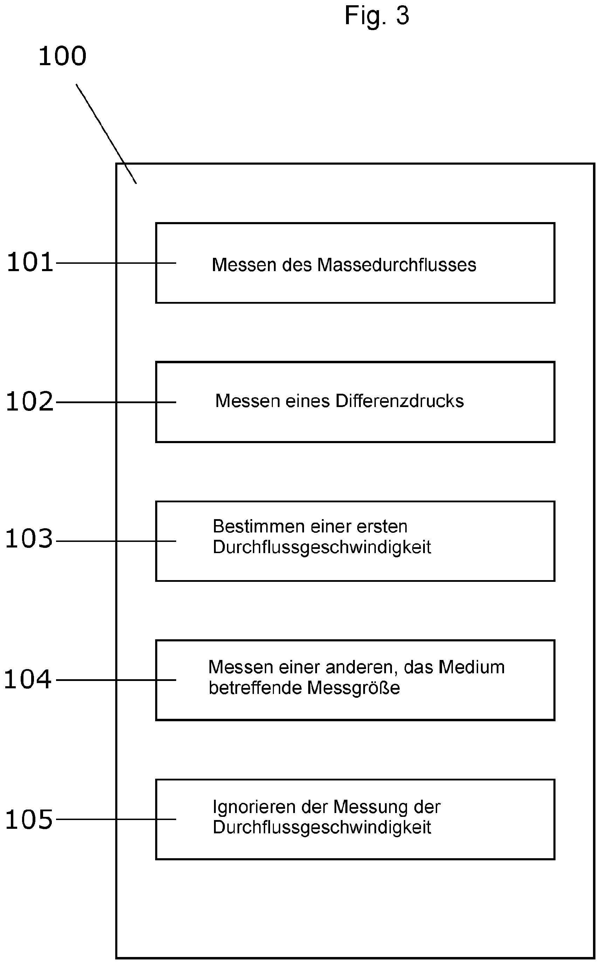

Fig. 3 beschreibt den Ablauf eines erfindungsgemäßen Verfahrens 100.

In einem Verfahrensschritt 101 wird ein Massedurchfluss eines durch die Rohrleitung 10 strömenden Mediums mit einem Coriolis-Durchflussmessgerät 20 gemessen, wobei das Coriolis-Durchflussmessgerät über einen Einlauf 21.1 und einen Auslauf 21.2 eines Messrohrs (21) mit der Rohrleitung verbunden ist,

In einem Verfahrensschritt 102 wird ein Differenzdrucks des Mediums zwischen einem einlaufseitigen Abschnitt der Rohrleitung und einem auslaufseitigen Abschnitt der Rohrleitung mittels eines ersten Drucksensors 31 und eines zweiten Drucksensors 32 und/oder eines Differenzdrucksensors 33 gemessen,
In einem Verfahrensschritt 103 wird eine erste Durchflussgeschwindigkeit des Mediums durch die Rohrleitung auf Basis der Differenzdruckmessung gemessen,
In einem Verfahrensschritt 104 wird eine andere, das Medium betreffende Messgröße als den Mediendruck mit einem ersten Kontrollsensor 41 in oder am einlaufseitigen Abschnitt der Rohrleitung und einem zweiten Kontrollsensor 42 in oder am auslaufseitigen Abschnitt der Rohrleitung gemessen,
In einem Verfahrensschritt 105 wird eine Messung der Durchflussgeschwindigkeit per Differenzdruckmessung ignoriert, falls mittels der Kontrollsensoren ein statischer oder quasistatischer Medienzustand festgestellt wird.

Quasistatisch bedeutet beispielsweise, dass ein Flüssigkeitsspiegel des Mediums bzw. das Medium eine Fortbewegungsgeschwindigkeit kleiner als eine spezifizierte Mindestgeschwindigkeit des Coriolis-Messgeräts bzw. bezüglich der Strömungsgeschwindigkeitsmessung per Druckdifferenzmessung hat.

Dabei kann eine Einbausituation des Coriolis-Messgeräts berücksichtigt werden. So führt bei einer senkrechten oder schrägen Anordnung des Coriolis-Messgeräts ein Höhenunterschied zwischen den Drucksensoren zu einem Druckunterschied, welcher gegebenenfalls mitberücksichtigt werden muss.

Die Erkennung des statischen Medienzustands weist dabei bevorzugt folgende Schritte auf:
Erstellen eines ersten Messwertverlaufs MW1 mit dem ersten Kontrollsensor 41, und Erstellen eines zweiten Messwertverlaufs MW2 mit dem zweiten Kontrollsensor 42;
Interpretieren einer Messwertdifferenz MD zwischen Messwerten des ersten Messwertverlaufs und Messwerten des zweiten Messwertverlaufs als Folge eines statischen Medienzustands, falls die Messwertdifferenz relativ zu einem ersten Mittelwert der zugehörigen Messwerte größer ist als ein erster Schwellwert und/oder
Bestimmen einer zweiten Durchflussgeschwindigkeit aus einer Kreuzkorrelation zwischen dem ersten Messwertverlauf und dem zweiten Messwertverlauf und Interpretieren einer Abweichung der zweiten Durchflussgeschwindigkeit relativ zu einem zweiten Mittelwert aus der ersten Durchflussgeschwindigkeit und der zweiten Durchflussgeschwindigkeit als Folge eines statischen Medienzustands, falls die Abweichung größer ist als ein zweiter Schwellwert
   und/oder
Interpretieren einer Messwertdifferenz zwischen Messwerten des ersten Messwertverlaufs und Messwerten des zweiten Messwertverlaufs als Folge eines statischen Medienzustands, falls die Messwertdifferenz über eine Zeitdauer (Z) konstant ist.
Bevorzugt gilt dabei, dass der erste Schwellwert beispielsweise mindestens 20% und insbesondere mindestens 40% und bevorzugt mindestens 50% größer ist als der erste Mittelwert,
   und/oder dass
der zweite Schwellwert beispielsweise mindestens 20% und insbesondere mindestens 40% und bevorzugt mindestens 50% größer ist als der zweite Mittelwert.

Bevorzugt gilt dabei, dass die Zeitdauer Z größer ist als 2 Sekunden, und insbesondere größer ist als 4 Sekunden und bevorzugt größer ist als 5 Sekunden. Auf diese Weise kann ausgeschlossen werden, dass eine Messwertdifferenz bei langsamem bzw. geringem Durchfluss beispielsweise durch eine lokal unterschiedliche Medienzusammensetzung zustande kommt.

Die Verfahrensschritte müssen dabei keiner strikten zeitlichen Reihenfolge unterliegen und können beispielsweise zumindest teilweise auch gleichzeitig durchgeführt werden. Die eingeführte Nummerierung dient im Wesentlichen zur Kennzeichnung der Verfahrensschritte.

### Bezugszeichenliste

- 1: Anordnung
- 10: Rohrleitung
- 11: stromaufwärts liegender Abschnitt
- 12: stromabwärts liegender Abschnitt
- 20: Coriolis-Durchflussmessgerät
- 21: Messrohr
- 21.1: Einlauf
- 21.2: Auslauf
- 22: elektronische Mess-/Betriebsschaltung
- 31: erster Drucksensor
- 32: zweiter Drucksensor
- 33: Differenzdrucksensor
- 41: erster Kontrollsensor
- 42: zweiter Kontrollsensor
- 50: externer Computer
- 100: Verfahren
- 101 - 105: Verfahrensschritte
- MW1: erster Messwertverlauf
- MW2: zweiter Messwertverlauf
- MD: Messwertdifferenz
- Z: Zeitdauer

## Patentansprüche

1. Anordnung (1) umfassend:
Eine Rohrleitung (10);
Ein Coriolis-Durchflussmessgerät (20) umfassend zumindest ein Messrohr (21) mit jeweils einem Einlauf (21.1) und einem Auslauf (21.2) eingerichtet zum Messen eines Massedurchflusses eines durch die Rohrleitung strömenden Mediums;
wobei ein erster Drucksensor (31) in oder an einem einlaufseitigen Abschnitt der Rohrleitung und ein zweiter Drucksensor (32) in oder an einem auslaufseitigen Abschnitt der Rohrleitung angebracht ist,
und/oder wobei ein Differenzdrucksensor (33) dazu eingerichtet ist, einen Druckunterschied zwischen einem einlaufseitigen Abschnitt der Rohrleitung und einem auslaufseitigen Abschnitt der Rohrleitung zu erfassen,
wobei die Drucksensoren und/oder der Differenzdrucksensor dazu eingerichtet sind, per Bestimmung eines Differenzdrucks zwischen einem einlaufseitigen Abschnitt der Rohrleitung und einem auslaufseitigen Abschnitt der Rohrleitung eine Durchflussgeschwindigkeit des Mediums durch die Rohrleitung zu bestimmen;
wobei ein erster Kontrollsensor (41) in oder an einem einlaufseitigen Abschnitt der Rohrleitung (11) und ein zweiter Kontrollsensor (42) in oder an einem auslaufseitigen Abschnitt (12) der Rohrleitung angebracht ist,
wobei die Kontrollsensoren dazu eingerichtet sind, eine andere Messgröße als den Mediendruck zu überwachen um einen statischen Medienzustand zu erkennen,
wobei eine elektronische Mess-/Betriebsschaltung (22) des Coriolis-Durchflussmessgeräts oder ein externer Computer dazu eingerichtet ist, Messsignale der Kontrollsensoren (41, 42), der Drucksensoren (31, 32) und/oder des Differenzdrucksensors (33) aufzunehmen und zu verarbeiten sowie eine Aussage bezüglich der Durchflussgeschwindigkeit des Mediums zu treffen,
**dadurch gekennzeichnet, dass**
die elektronische Mess-/Betriebsschaltung (22) des Coriolis-Durchflussmessgeräts oder der externe Computer dazu eingerichtet ist, eine Messung der Durchflussgeschwindigkeit per Differenzdruckmessung zu ignorieren, falls mittels der Kontrollsensoren ein statischer oder quasistatischer Medienzustand festgestellt wird.

2. Anordnung nach Anspruch 1,
wobei die Messgröße der Kontrollsensoren (41, 42) zumindest eine aus folgender Liste ist:
Mediendichte, Viskosität, Schallgeschwindigkeit, Leitfähigkeit, Wärmekapazität, elektrische Kapazität, Aggregatzustand des Mediums.

3. Anordnung nach Anspruch 1 oder 2,
wobei eine elektronische Mess-/Betriebsschaltung (22) des Coriolis-Durchflussmessgeräts dazu eingerichtet ist, Messsignale der Kontrollsensoren (41, 42), der Drucksensoren (31, 32) und/oder des Differenzdrucksensors (33) aufzunehmen und zu verarbeiten sowie eine Aussage bezüglich der Durchflussgeschwindigkeit des Mediums zu treffen,
oder wobei die Anordnung einen externen Computer (50) aufweist, welcher dazu eingerichtet ist, Messsignale der Kontrollsensoren (41, 42), der Drucksensoren (31, 32) und/oder des Differenzdrucksensors (33) sowie Durchflussmesswerte der elektronischen Mess-/Betriebsschaltung aufzunehmen und zu verarbeiten sowie eine Aussage bezüglich der Durchflussgeschwindigkeit des Mediums zu treffen.

4. Verfahren (100) zum Betreiben der Anordnung (1) nach einem der vorigen Ansprüche,
wobei das Verfahren folgende Schritte aufweist:
(101) Messen eines Massedurchflusses eines durch eine Rohrleitung (10) strömenden Mediums mit einem Coriolis-Durchflussmessgerät (20), wobei das Coriolis-Durchflussmessgerät über einen Einlauf (21.1) und einen Auslauf (21.2) eines Messrohrs (21) mit der Rohrleitung verbunden ist,
(102) Messen eines Differenzdrucks des Mediums zwischen einem einlaufseitigen Abschnitt der Rohrleitung und einem auslaufseitigen Abschnitt der Rohrleitung mittels eines ersten Drucksensors (31) und eines zweiten Drucksensors (32) und/oder eines Differenzdrucksensors (33),
(103) Bestimmen einer ersten Durchflussgeschwindigkeit des Mediums durch die Rohrleitung auf Basis der Differenzdruckmessung,
(104) Messen einer anderen, das Medium betreffende Messgröße als den Mediendruck mit einem ersten Kontrollsensor (41) in oder am einlaufseitigen Abschnitt der Rohrleitung und einem zweiten Kontrollsensor (42) in oder am auslaufseitigen Abschnitt der Rohrleitung,
**dadurch gekennzeichnet, dass**
das Verfahren folgenden Schritt aufweist:
(105) Ignorieren der Messung der Durchflussgeschwindigkeit per Differenzdruckmessung falls mittels der Kontrollsensoren ein statischer oder quasistatischer Medienzustand festgestellt wird.

5. Verfahren nach Anspruch 4,
wobei die Erkennung des statischen Medienzustands folgende Schritte aufweist:
Erstellen eines ersten Messwertverlaufs (MW1) mit dem ersten Kontrollsensor (41), und Erstellen eines zweiten Messwertverlaufs (MW2) mit dem zweiten Kontrollsensor (42);
Interpretieren einer Messwertdifferenz (MD) zwischen Messwerten des ersten Messwertverlaufs und Messwerten des zweiten Messwertverlaufs als Folge eines statischen Medienzustands, falls die Messwertdifferenz relativ zu einem ersten Mittelwert der zugehörigen Messwerte größer ist als ein erster Schwellwert
und/oder
Bestimmen einer zweiten Durchflussgeschwindigkeit aus einer Kreuzkorrelation zwischen dem ersten Messwertverlauf und dem zweiten Messwertverlauf und Interpretieren einer Abweichung der zweiten Durchflussgeschwindigkeit relativ zu einem zweiten Mittelwert aus der ersten Durchflussgeschwindigkeit und der zweiten Durchflussgeschwindigkeit als Folge eines statischen Medienzustands, falls die Abweichung größer ist als ein zweiter Schwellwert
und/oder
Interpretieren einer Messwertdifferenz zwischen Messwerten des ersten Messwertverlaufs und Messwerten des zweiten Messwertverlaufs als Folge eines statischen Medienzustands, falls die Messwertdifferenz über eine Zeitdauer (Z) konstant ist.

6. Verfahren nach Anspruch 5,
wobei der erste Schwellwert beispielsweise mindestens 20% und insbesondere mindestens 40% und bevorzugt mindestens 50% größer ist als der erste Mittelwert, und/oder
wobei der zweite Schwellwert beispielsweise mindestens 20% und insbesondere mindestens 40% und bevorzugt mindestens 50% größer ist als der zweite Mittelwert.

7. Verfahren nach Anspruch 5 oder 6,
wobei die Zeitdauer (Z) größer ist als 2 Sekunden, und insbesondere größer ist als 4 Sekunden und bevorzugt größer ist als 5 Sekunden.

8. Verfahren nach einem der Ansprüche 4 bis 7,
wobei eine elektronische Mess-/Betriebsschaltung (22) des Coriolis-Durchflussmessgeräts Messsignale der Kontrollsensoren (41, 42), der Drucksensoren (31, 32) und/oder des Differenzdrucksensors (33) aufnimmt und verarbeitet sowie eine Aussage bezüglich der Durchflussgeschwindigkeit des Mediums trifft,
oder ein externer Computer Messsignale der Kontrollsensoren (41, 42), der Drucksensoren (31, 32) und/oder des Differenzdrucksensors (33) sowie Durchflussmesswerte der elektronischen Mess-/Betriebsschaltung aufnimmt und verarbeitet sowie eine Aussage bezüglich der Durchflussgeschwindigkeit des Mediums trifft.

## Claims

1. An arrangement (1) comprising:
A pipe (10);
A Coriolis flow meter (20), comprising at least one measuring tube (21) that exhibits one inlet (21.1) and one outlet (21.2) and is configured to measure a mass flow of a medium flowing through the pipe;
wherein a first pressure sensor (31) is fitted in or on a inlet-side section of the pipe and a second pressure sensor (32) is fitted in or on an outlet-side section of the pipe,
and/or wherein a differential pressure sensor (33) is configured to detect a pressure difference between an inlet-side section of the pipe and an outlet-side section of the pipe,
wherein the pressure sensors and/or the differential pressure sensor are configured to determine a flow rate of the medium through the pipe by determining a differential pressure between an inlet-side section of the pipe and an outlet-side section of the pipe;
wherein a first control sensor (41) is fitted in or on an inlet-side section of the pipe (11) and a second control sensor (42) is fitted in or on an outlet-side section (12) of the pipe,
wherein the control sensors are configured to monitor a measured variable other than the media pressure in order to detect a static media state,
wherein an electronic measuring/operating circuit (22) of the Coriolis flow meter or an external computer is configured to both record and process measurement signals of the control sensors (41, 42), of the pressure sensors (31, 32) and/or of the differential pressure sensor (33), as well as to make a statement with regard to the flow rate of the medium,
**characterized in that** the electronic measuring/operating circuit (22) of the Coriolis flow meter or the external computer is configured to ignore a measurement of the flow rate in the form of the differential pressure measurement if a static or quasi-static media state is determined by the control sensors.

2. An arrangement according to claim 1,
wherein the measured variable of the control sensors (41, 42) is at least one from the following list:
Media density, viscosity, speed of sound, conductivity, thermal capacity, electrical capacitance, physical state of the medium.

3. An arrangement according to claim 1 or 2,
wherein an electronic measuring/operating circuit (22) of the Coriolis flow meter is configured to both record and process the measurement signals of the control sensors (41, 42), of the pressure sensors (31, 32) and/or of the differential pressure sensor (33), as well as to make a statement with regard to the flow rate of the medium,
or wherein the arrangement exhibits an external computer (50) that is configured to record and process measurement signals of the control sensors (41, 42), of the pressure sensors (31, 32) and/or of the differential pressure sensor (33), as well as flow rate measurements of the electronic measuring/operating circuit, and to make a statement with regard to the flow rate of the medium.

4. A method (100) for operating the arrangement (1) according to one of the preceding claims,
wherein the method exhibits the following steps:
(101) Measurement of a mass flow of a medium flowing through a pipe (10) with a Coriolis flow meter (20), wherein the Coriolis flow meter is connected to the pipe via one inlet (21.1) and one outlet (21.2) of a measuring tube (21),
(102) Measurement of a differential pressure of the medium between an inlet-side section of the pipe and an outlet-side section of the pipe using a first pressure sensor (31) and a second pressure sensor (32) and/or a differential pressure sensor (33),
(103) Determination of a first flow rate of the medium through the pipe on the basis of the differential pressure measurement,
(104) Measurement of medium-related measured variable other than the media pressure with a first control sensor (41) fitted in or on the inlet-side section of the pipe and a second control sensor (42) fitted in or on the outlet-side section of the pipe,
**characterized in that**
the method exhibits the following step:
(105) The flow rate measurement determined by differential pressure measurement is ignored if a static or quasi-static media state is determined by the control sensors.

5. A method according to claim 4, wherein the detection of the static media state exhibits the following steps:
Definition of a first measured value progression (MW1) with the first control sensor (41), as well as definition of a second measured value progression (MW2) with the second control sensor (42);
Interpretation of a measured value difference (MD) between measured values of the first measured value progression and measured values of the second measured value progression as a result of a static media state, if the measured value difference is greater than a first threshold value relative to a first average value of the accompanying measured values
and/or
Determination of a second flow rate from a cross-correlation between the first measured value progression and the second measured value progression, as well as interpretation of a deviation in the second flow rate relative to a second average value from the first flow rate and the second flow rate as a result of a static media state, if the variance is greater than a second threshold value
and/or
Interpretation of a measured value difference between measured values of the first measured value progression and measured values of the second measured value progression as a result of a static media state, if the measured value difference is constant over a duration (Z).

6. A method according to claim 5,
wherein the first threshold value is, for example, at least 20%, in particular at least 40% and preferably at least 50% greater than the first average value, and/or
wherein the second threshold value is, for example, at least 20%, in particular at least 40% and preferably at least 50% greater than the first average value.

7. A method according to claim 5 or 6,
wherein the duration (Z) is greater than 2 seconds, in particular greater than 4 seconds and preferably greater than 5 seconds.

8. A method according to one of the claims 4 to 7,
wherein an electronic measuring/operating circuit (22) of the Coriolis flow meter records and processes measurement signals of the control sensors (41, 42), of the pressure sensors (31, 32) and/or of the differential pressure sensor (33), and also makes a statement with regard to the flow rate of the medium,
or an external computer records and processes measurement signals of the control sensors (41, 42), of the pressure sensors (31, 32) and/or of the differential pressure sensor (33), as well as measured flow rate values of the electronic measuring/operating circuit, and makes a statement with regard to the flow rate of the medium.

## Revendications

1. Arrangement (1) comprenant :
Une conduite (10) ;
Un débitmètre Coriolis (20), lequel comprend au moins un tube de mesure (21) avec respectivement une entrée (21.1) et une sortie (21. 2), lequel débitmètre est conçu pour mesurer le débit massique d'un produit s'écoulant à travers la conduite ;
un premier capteur de pression (31) étant monté dans ou sur une section d'entrée de la conduite et un deuxième capteur de pression (32) étant monté dans ou sur une section de sortie de la conduite,
et/ou un capteur de pression différentielle (33) étant conçu pour mesurer une différence de pression entre une section d'entrée de la conduite et une section de sortie de la conduite,
les capteurs de pression et/ou le capteur de pression différentielle étant conçus pour déterminer une vitesse d'écoulement du produit à travers la conduite par détermination d'une pression différentielle entre une section d'entrée de la conduite et une section de sortie de la conduite ;
un premier capteur de contrôle (41) étant monté dans ou sur une section d'entrée de la conduite (11) et un deuxième capteur de contrôle (42) étant monté dans ou sur une section de sortie (12) de la conduite,
les capteurs de contrôle étant conçus pour surveiller une grandeur de mesure autre que la pression du produit afin de détecter un état statique du produit, un circuit électronique de mesure/d'exploitation (22) du débitmètre Coriolis ou un ordinateur externe étant conçu pour enregistrer et traiter des signaux de mesure des capteurs de contrôle (41, 42), des capteurs de pression (31, 32) et/ou du capteur de pression différentielle (33) et pour fournir une indication concernant la vitesse d'écoulement du produit,
**caractérisé en ce que**
le circuit électronique de mesure/d'exploitation (22) du débitmètre Coriolis ou l'ordinateur externe est conçu pour ignorer une mesure de la vitesse d'écoulement par mesure de pression différentielle dans le cas où un état statique ou quasi-statique du produit est détecté au moyen des capteurs de contrôle.

2. Arrangement selon la revendication 1,
pour lequel la grandeur de mesure des capteurs de contrôle (41, 42) est au moins l'une des suivantes :
densité du produit, viscosité, vitesse du son, conductivité, capacité thermique, capacité électrique, état physique du produit.

3. Arrangement selon la revendication 1 ou 2,
pour lequel un circuit électronique de mesure/d'exploitation (22) du débitmètre Coriolis est conçu pour enregistrer et traiter des signaux de mesure des capteurs de contrôle (41, 42), des capteurs de pression (31, 32) et/ou du capteur de pression différentielle (33) et pour fournir une indication concernant la vitesse d'écoulement du produit, ou
pour lequel l'arrangement comporte un ordinateur externe (50), lequel est conçu pour enregistrer et traiter des signaux de mesure des capteurs de contrôle (41, 42), des capteurs de pression (31, 32) et/ou du capteur de pression différentielle (33) ainsi que des valeurs mesurées de débit du circuit électronique de mesure/d'exploitation et pour fournir une indication concernant la vitesse d'écoulement du produit.

4. Procédé (100) destiné à l'exploitation de l'arrangement (1) selon l'une des revendications précédentes,
ledit procédé comprenant les étapes suivantes :
(101) Mesure d'un débit massique d'un produit s'écoulant dans une conduite (10) avec un débitmètre Coriolis (20), le débitmètre Coriolis étant relié à la conduite par une entrée (21.1) et une sortie (21.2) d'un tube de mesure (21),
(102) Mesure d'une pression différentielle du produit entre une section d'entrée de la conduite et une section de sortie de la conduite au moyen d'un premier capteur de pression (31) et d'un deuxième capteur de pression (32) et/ou d'un capteur de pression différentielle (33),
(103) Détermination d'une première vitesse d'écoulement du produit à travers la conduite sur la base de la mesure de pression différentielle,
(104) Mesure d'une grandeur de mesure concernant le produit autre que la pression du produit avec un premier capteur de contrôle (41) dans ou sur la section côté entrée de la conduite et un deuxième capteur de contrôle (42) dans ou sur la section côté sortie de la conduite,
**caractérisé en ce que**
le procédé comprend l'étape suivante :
(105) Ignorance de la mesure de la vitesse d'écoulement par mesure de la pression différentielle dans le cas où un état statique ou quasi-statique du produit est détecté au moyen des capteurs de contrôle.

5. Procédé selon la revendication 4,
pour lequel la détection de l'état statique du produit comprend les étapes suivantes :
Génération d'une première courbe de valeurs mesurées (MW1) avec le premier capteur de contrôle (41) et génération d'une deuxième courbe de valeurs mesurées (MW2) avec le deuxième capteur de contrôle (42) ;
Interprétation d'une différence de mesure (MD) entre des valeurs mesurées de la première courbe de valeurs mesurées et des valeurs mesurées de la deuxième courbe de valeurs mesurées comme une conséquence d'un état statique du produit, dans le cas où la différence de valeurs mesurées par rapport à une première valeur moyenne des valeurs mesurées associées est supérieure à une première valeur de seuil
et/ou
Détermination d'une deuxième vitesse d'écoulement à partir d'une corrélation croisée entre la première courbe de valeurs mesurées et la deuxième courbe de valeurs mesurées et interprétation d'un écart de la deuxième vitesse d'écoulement par rapport à une deuxième valeur moyenne de la première vitesse d'écoulement et de la deuxième vitesse d'écoulement comme une conséquence d'un état statique du produit, dans le cas où l'écart est supérieur à une deuxième valeur de seuil
et/ou
Interprétation d'une différence de valeurs mesurées entre les valeurs mesurées de la première courbe de valeurs mesurées et les valeurs mesurées de la deuxième courbe de valeurs mesurées comme une conséquence d'un état statique du produit, dans le cas où la différence de valeurs mesurées est constante sur une période de temps (Z).

6. Procédé selon la revendication 5,
pour lequel la première valeur de seuil est par exemple supérieure à la première valeur moyenne d'au moins 20 %, notamment d'au moins 40 % et de préférence d'au moins 50 %,
et/ou
pour lequel la deuxième valeur de seuil est par exemple supérieure à la deuxième valeur moyenne d'au moins 20 %, notamment d'au moins 40 % et de préférence d'au moins 50 %.

7. Procédé selon la revendication 5 ou 6,
pour lequel la période temps (Z) est supérieure à 2 secondes, notamment supérieure à 4 secondes et de préférence supérieure à 5 secondes.

8. Procédé selon l'une des revendications 4 à 7,
pour lequel un circuit électronique de mesure/d'exploitation (22) du débitmètre Coriolis enregistre et traite des signaux de mesure des capteurs de contrôle (41, 42), des capteurs de pression (31, 32) et/ou du capteur de pression différentielle (33) et fournit une indication concernant la vitesse d'écoulement du produit, ou un ordinateur externe enregistre et traite les signaux de mesure des capteurs de contrôle (41, 42), des capteurs de pression (31, 32) et/ou du capteur de pression différentielle (33) ainsi que les valeurs mesurées de débit du circuit électronique de mesure/d'exploitation et fournit une indication concernant la vitesse d'écoulement du produit.
